(19) Europäisches Patentamt
European Patent Office
Office européen des brevets

(11) **EP 4 325 171 A1**

(12) **EUROPEAN PATENT APPLICATION**

(43) Date of publication:
**21.02.2024 Bulletin 2024/08**

(21) Application number: **23184823.5**

(22) Date of filing: **11.07.2023**

(51) International Patent Classification (IPC):
**G01C 21/30** $^{(2006.01)}$   **G01C 21/00** $^{(2006.01)}$

(52) Cooperative Patent Classification (CPC):
**G01C 21/3807; G01C 21/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.08.2022 GB 202211367**

(71) Applicant: **Continental Autonomous Mobility Germany GmbH**
**85057 Ingolstadt (DE)**

(72) Inventors:
- **Natoli, Alice**
  **90411 Nürnberg (DE)**
- **Luthardt, Stefan**
  **90411 Nürnberg (DE)**
- **Seitz, Julien**
  **90411 Nürnberg (DE)**
- **Wischer, Gerrit**
  **90411 Nürnberg (DE)**

(74) Representative: **Continental Corporation**
**c/o Continental Automotive GmbH**
**Intellectual Property**
**Nordostpark 30**
**90411 Nürnberg (DE)**

(54) **METHOD AND SYSTEM FOR GENERATING A MAP AND THE LOCALIZATION OF AN EGO-VEHICLE**

(57) The invention relates to a method for generating a map in an ego-vehicle for localization of the ego-vehicle comprising the following steps:
- Acquiring (S1) a map with static objects of an environment of the ego-vehicle;
- Acquiring (S2) general area information and information on special areas of the ego-vehicle's environment;
- Acquiring (S3) a predefined occupancy probability ($P_{Occ}1$ - $P_{Occ}X$);
- Assigning (S4) respective static objects from the map to special areas;
- Determining (S5) if the static objects are permanent static objects or temporary static objects based on the assignment of the special areas;
- Updating (S6) the map with the information on temporary and permanent static objects;
- Capturing (S7) the environment of the ego-vehicle by at least one sensor (2) located in the ego-vehicle;
- Generating (S8) an environment representation based on the sensor data of the at least one sensor (2);
- Determining (S9) static and dynamic objects in the environment of the ego-vehicle based on the environment representation;
- Localizing (S10) the ego-vehicle in the updated map using the sensor data and/or environment representation.

Fig. 1

## Description

## Technical field

The invention relates to a method and a system for generating a map and the localization of an ego-vehicle in the presence of temporary static objects.

The invention relates to the technical field of generating environment models and localization of a vehicle.

## State of the art

Form the state of the art several methods are known to generate an environment model. Also, different kinds of environment models are already known. The environment model could be an occupancy grid, a freespace map or a semantic grid map. These grids or maps are generated by using sensor data and detecting objects with the respective sensors.

## Object of the invention

One drawback of the known methods and environment models is that in the problem of mapping, using any sensor like radar, lidar or stereo camera it often occurs that objects like parked vehicles are mapped as static environment. At the moment of the mapping, during data acquisition, those objects are in fact static and their speed is zero. For this reason, they cannot be easily discriminated from the actual static environment like a building or a traffic sign. This could lead to localization errors of the ego- vehicle driving past the same area where the objects, previously mapped in the static environment, changed. And with "previously" we intend a few instants earlier (in the case of SLAM) or a completely different time in the past.

Therefore, it is an object of the present invention to provide a method and system for generating an environment model map in which the aforementioned drawbacks are reduced, and the localization of the ego-vehicle is improved.

This object is solved by independent claims 1 and 8.

Further preferred embodiments are subject to the dependent claims.

## Detailed description

In the following paragraphs we will refer to: "dynamic objects" as the objects that are clearly moving during map acquisition, "temporary static objects " to the objects that are in general dynamic but static at moment of map acquisition and "permanent static object" to objects that cannot move in any case.

In first considerations it was considered that such temporary static objects are usually caused by parked vehicles in parking spots or parking lots next to the road or in general areas, where not always static objects are present, and the static objects can change over time. Therefore, it would be beneficial to have a priori knowledge if such a parking spot or such an area is occupied or not in the area where the ego-vehicle is currently driving. If this information is not available, it is still possible to define a generic a priori probability for the special areas e.g. parking lots to be occupied.

Therefore, according to the invention a method for generating a map in an ego-vehicle for localization of the ego-vehicle is presented, comprising the following steps:

- Acquiring a map with static objects of an environment of the ego-vehicle;
- Acquiring general area information and information on special areas of the ego-vehicle's environment;
- Acquiring a predefined occupancy probability ($P_{Occ}1$ - $P_{Occ}X$);
- Assigning respective static objects from the map to special areas;
- Determining if the static objects are permanent static objects or temporary static objects based on the assignment of the special areas;
- Updating the map with the information on temporary and permanent static objects;
- Capturing the environment of the ego-vehicle by at least one sensor located in the ego-vehicle;
- Generating an environment representation based on the sensor data of the at least one sensor;
- Determining static and dynamic objects in the environment of the ego-vehicle based on the environment representation;
- Localizing the ego-vehicle in the updated map using the sensor data and/or environment representation.

The at least one sensor is preferably a mono camera, a stereo camera, a radar, a supersonic sensor or a lidar sensor. However, it is also conceivable to use a plurality of sensors which could be multiple sensors of the same type or can be a combination of multiple sensors of the same and different types.

The environment representation depends on the used sensor. For example, for a camera sensor the representation is a camera image or a sequence of camera images. For radar it would be e.g. an object list. For multiple sensors it could be a fusion of the different representation or the individual representation for each sensor could be used. The environment representation could also comprise e.g. voxel, mash or data clouds.

With the environment representation the objects in the environment of the ego-vehicle can be determined and it can be determined if the object is static or dynamic. This determination could be done with an object classification.

The acquired map is preferably a localization map which is pre-created and provided to the ego-vehicle. In contrast thereto there can be a map created during operation of the ego-vehicle which would be an online environment map based on the environment representation. This map can be a dynamic grid that is used for perception. The map which is acquired and updated however refers to the localization map. This acquired map can be for example an occupancy grid map, a freespace map, or the like. The occupancy grid map e.g. consist of a plurality of grid cells which can have the state free or occupied. The map contains static objects of an environment of the ego-vehicle. The environment of the ego-vehicle is determined by the locations where the ego-vehicle is going to drive, e.g. based on a route which is to be navigated which can be provided before the vehicle starts moving, or the environment can be determined by the sensors of the ego-vehicle during operation of the vehicle, since when operating the vehicle the environment constantly changes and it has to be ensured that the map still covers the environment. The map can e.g. cover the whole route to be navigated or only parts of it. It is also conceivable that the map covers a target location of the vehicle, since the map might not be needed on highways or the like.

To have area information and information on special areas of the ego-vehicle's environment is advantageous since it leads to a better understanding of the environment. Those special areas have a predefined occupancy probability. For those areas it is known that there are no permanent static objects but temporary static objects can occur regularly. Therefore, an a priori occupancy probability value is assigned to those areas.

The special area can be also typical stopping area at the intersection, or even a side walk where pedestrians are often standing.

The information on permanent and temporary static objects is then added to the grid map and the grid map is updated. With the additional information on temporary and static objects in the environment of the ego-vehicle, the ego-vehicle can be localized more precisely since there is now a differentiation between e.g. buildings and parked cars.

In a preferred embodiment the map is acquired by generating the map based on the information from the environment representation or by acquiring a pre created map from an external data source. When generating the map directly based on the information from the environment representation this information is then used to generate a map, e.g. grid map, which consists of occupied and free grid cells. All static objects are assigned as occupied grid cells. After the grid map is generated the static objects which are in the special areas, if there are some in the environment, are assigned to those areas. With this assignment it can be distinguished between temporary and permanent static objects since all objects in the special area are considered temporary static. Preferably, the map is acquired from an external data source. This external data source could be a database, where this map and all information belonging to this map are stored and constantly updated. Also, this external data source could be another vehicle that creates a localization map and provides it to its surrounding and the vehicles in the surrounding. Alternatively this data source could be an infrastructure element that generates such a localization map for its environment and provides it to vehicles or even databases.

In a preferred embodiment the area information and the information on special areas is acquired from a database, a navigation system, an infrastructure element or by classifying the sensor data. The database could be a database located inside the vehicle or could be a backend server where information on the current environment is stored and can be accessed. A navigation system is advantageous since it already knows the GPS-location of the ego-vehicle and has already additional information about the environment. An infrastructure element could send information about the area via V2X-communication (vehicle to x-communication). The ego-vehicle has for this case a V2X communication module. The classification can also be done on other sensor information that is not used for the grid mapping.

In a further preferred embodiment the area information contains information about population density and area type as well as popular times. Area type comprises information if the area is e.g. an industrial area, city, city center, rural area or a residential area. The term "popular times" means an information about how crowded a specific place is at a specific time. For example such "popular times" can be seen in google for shops or the like. This can also be assigned to parking spots which are also more likely occupied according to specific times during the day. For example the occupancy probability can change in time based on traffic information or business hours or live "business occupancy" data if available ( see google popular times table) . This information can also be considered when using this information to generate the updated map in the vehicle.

In a further preferred embodiment the map is constantly updated to consider the change of special area information and predefined probabilities over time. To constantly update the map, the steps S1 to S6 of the method are repeated continuously to always have the most recent information on the special areas and the probabilities.

Further it is preferred that the special areas are areas that may or not be occupied by temporary static objects. Such areas could for example comprise roads, sidewalks, intersection areas or the like.

In another particularly preferred embodiment the special areas comprise in particular parking areas. Parking areas are either parking lots, parking garages, or also parking spots next to the road. The special areas could also be green areas or fairgrounds where also vehicles or other objects could occur but only temporarily for a certain period of time or for fairgrounds on special dates throughout the year. The information about parking lots could e.g. be acquired from an HD-map. Alternatively a classification algorithm can be run on the map, e.g. an occupancy grid map, to identify parked vehicles and the areas where the vehicles are is then considered a special area. Optional, extra live information may be added like traffic or popular time from google.

It is further preferred that the predefined occupancy probability is acquired from a database. This database can either be located inside the vehicle or be e.g. a backend server. The predefined occupancy probability depends e.g. from the current area type and the population density..

In the case of a parking lot the state of occupancy can change over time. Neither the assignment of the occupancy probability to zero, parking lot free, neither to 1, parking lot occupied, would be probabilistically correct.

It is especially important that this predefined probability value reflects as much as possible the reality if the data is used for localization. When there are a lot of empty/filled parking spots around the ego-vehicle, and the occupancy map was randomly filled (mapped in a random day without any further correction) this can cause displacement in the position of the vehicle during online localization.

The occupancy probability for parking spots should be carefully chosen to reflect the real occupancy behavior as much as possible. Specific statistic for a certain area could be used if available. In general, the probability of a parking lot to be occupied depends mainly on the time of the day, day of the week, date, e.g. special holidays and events, area type, e.g. residential, industrial or commercial, and population density, e.g. big city or small village.

In a first example it is assumed that only the area where the parking spots are located is known. One solution with no further information is to assign the probability to 0.5. This would describe properly the unknown state of occupancy.

Another example would be to assign the a priori probability considering the distance from city center or even the population density if available. The occupancy probability of grid cells at parking spots can for example be set to a value in a range of e.g. 0.5 to a maximum value of 0.98 in the city center.

In the next example the center point of the parking lot is known. With this knowledge a more specific spatial probability distribution can be designed. The area in the middle of the parking lot is more likely to be occupied. This assumption can be used to define an empirical formula for the probability distribution. For example the probability of a cell to be occupied P_occ could be described as an exponential decay function of the distance d to the center of the parking lot like the following:

$$P_{Occ} = \exp(-d.*k); \text{ (using matlab syntax)}.$$

Wherein $P_{Occ}$ describes the occupancy probability, d is the distance to the center of the parking lot and k is the decay factor.

As mentioned, the best prior occupancy probability of the center of the parking lot may be in the range for instance [0.5 - 0.9].

In a further preferred embodiment the occupancy probability for parking areas is predefined for each individual parking spot.

In this case, not only the area of the parking lots and their central points are known, but also the specific geometry of the parking markers for each parking spot. The area of the lane marking itself is in fact more likely to be free while the middle area of the parking lot is more likely to be occupied. A new function can be designed using the distance to the closer marker.

Alternatively, considering the average vehicle size and the marker geometry, every parking space can be discretized in different zones with different probabilities. As described previously the middle part is occupied, then again there is another ring area that may be occupied while the area on the marking is free.

For design of the probability also the specific sensor setup on the vehicle can be considered. The expected observed shape is depending on that as well as from the shape/position/ material of the possible vehicle objects

According to the invention also a system for generating a map in an ego-vehicle for localization of the ego-vehicle is provided, comprising at least one sensor for capturing the environment of the ego-vehicle, an evaluation unit which evaluates sensor data of the at least one sensor and is designed to generate an environment representation and to determine objects and a computational unit that is designed to execute a method according to any of the aforementioned embodiments.

The computational unit is at least designed to acquire area information and information on special areas of the ego-vehicle's environment, acquire a predefined occupancy probability for the special areas, generate a grid map with a plurality of grid cells based on the static and dynamic objects, the area information and the information on special areas, wherein the grid cells have a free or occupied state, assign respective static objects to special areas, determine if the static objects are permanent static objects or temporary static objects based on the assignment to the special areas, update the grid map with the information on temporary and permanent static objects and to localize the ego-vehicle in the updated grid map.

Preferably, the system can comprise a database for the area information, the information on special areas and the predefined occupancy probability for the special areas. This database provides the information to the computational unit. If the database is located inside of the vehicle, the database can provide the information directly to the computational unit or in other words the computational unit can acquire this information from the database. If the database is located outside of the vehicle as a backend server or if the information would be provided via an external source like an infrastructure element, the system would have a V2X-communication unit which then receives or acquires the information and sends it to the computational unit, or in other words the computational unit would acquire the information from the V2X-communication unit.

Other preferred embodiments are subject to the figures.

Herein show:

Fig. 1: a schematic flow chart of a method according to an embodiment of the invention;

Fig. 2: a schematic representation of a system according to an embodiment of the invention;

Fig. 3: a schematic representation of a map with predefined occupancy probability values according to an embodiment of the invention;

Fig. 4: a schematic representation of an exponential decay function graph with different decay factors according to an embodiment of the invention;

Fig. 5: a schematic representation of an exponential decay function graph with a fixed decay factor according to an embodiment of the invention;

Fig. 6: a schematic representation of an occupancy probability for individual parking spots.

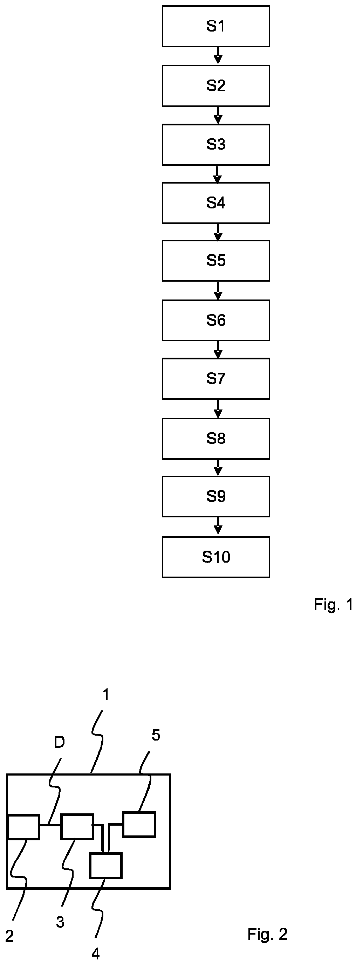

Figure 1 shows a schematic flow chart of a method according to an embodiment of the invention. In a first step S1 a map is acquired with static object of the environment of the ego-vehicle. In a next step S2 general information and information on special aeras of the ego-vehicle's environment is acquired. In step S3 a predefined occupancy probability $P_{Occ}1$ - $P_{Occ}X$ for the special areas is acquired. In a further step S4 respective static objects from the map are assigned to the special areas. In step S5 it is determined if the static objects are permanent static objects or temporary static objects based on the assignment to the special areas. In step S6 the map is updated with the information on temporary and permanent static objects. Those first steps S1 to S6 can be executed repeatedly to constantly update the map with the most current information. In a next step S7 the environment of the ego-vehicle is captured by at least one sensor located in the ego-vehicle. In the following step S8 an environment representation is generated based on the sensor data of the at least one sensor. Further, in step S9 static and dynamic objects in the environment of the vehicle are determined based on the environment representation. Finally, in step S10 the ego-vehicle is localized in the updated map using the sensor data and/or environment representation.

Figure 2 shows a schematic representation of a system according to an embodiment of the invention.

The system 1 comprises at least one sensor 2, an evaluation unit 3 and a computational unit 4. In the embodiment presented in this figure the system 1 also comprises a database 5. The camera 2 and the evaluation unit 3 are connected via a data connection D. Also, the database 5 and the evaluation unit 3 are connected via a data connection D to the computational unit 4. The data connection D can be wireless or wired if the database is located in the ego-vehicle. If the database 5 is located outside of the vehicle the data connection D needs to be wireless.

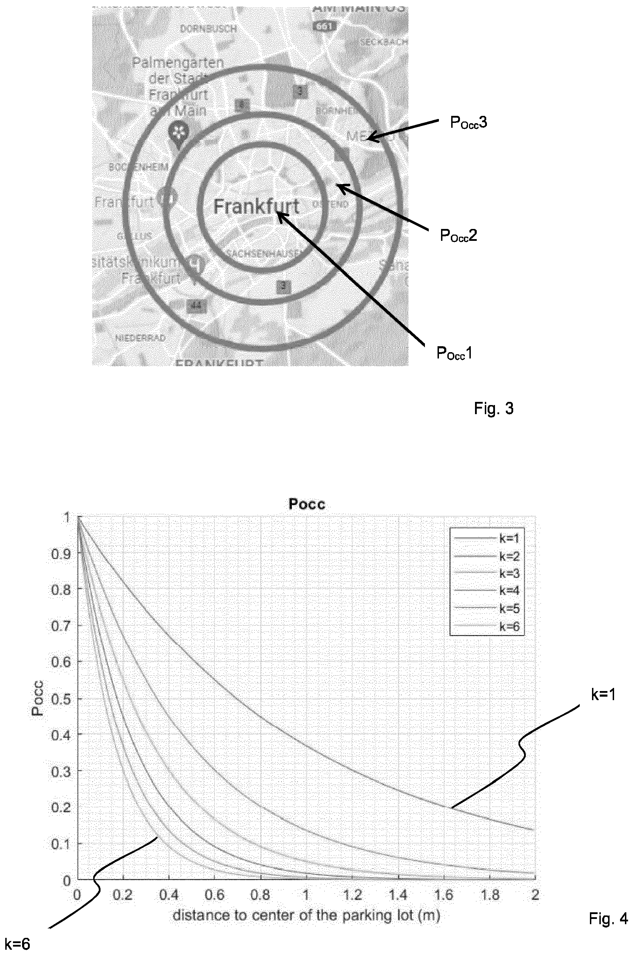

Figure 3 shows a schematic representation of a map with predefined occupancy probability values according to an embodiment of the invention. In this representation only the area where the special areas or the parking areas are located are known and the city area is divided into three areas which defined by their distance to the city center. The inner circle, which covers the city center can have for instance a first predefined occupancy probability $P_{occ}1 = 0.98$. With this probability value it is defined that the parking spots in the city center are most likely to be occupied. The next outer ring could have an occupancy probability value $P_{occ}2 = 0.95$. With this value it can be assumed that these parking spots are still close to the city center but not directly in the center and have a high probability of being occupied but not as much as the parking areas directly in the city center. The next area which is the furthest from the city center could have an occupancy probability $P_{occ}3 = 0.9$ and indicate that in comparison to the first two areas it is less likely that the parking areas are occupied but there is still a high probability.

Figure 4 shows a schematic representation of an exponential decay function graph with different decay factors according to an embodiment of the invention. This function can be described as $P_{Occ}=exp(-d.*k)$; (using matlab syntax).

Wherein $P_{Occ}$ describes the occupancy probability, d is the distance to the center of the parking lot and k is the decay factor. As can be seen in the function diagram the closer the parking spot is to the center of a parking lot the higher the occupancy probability is.

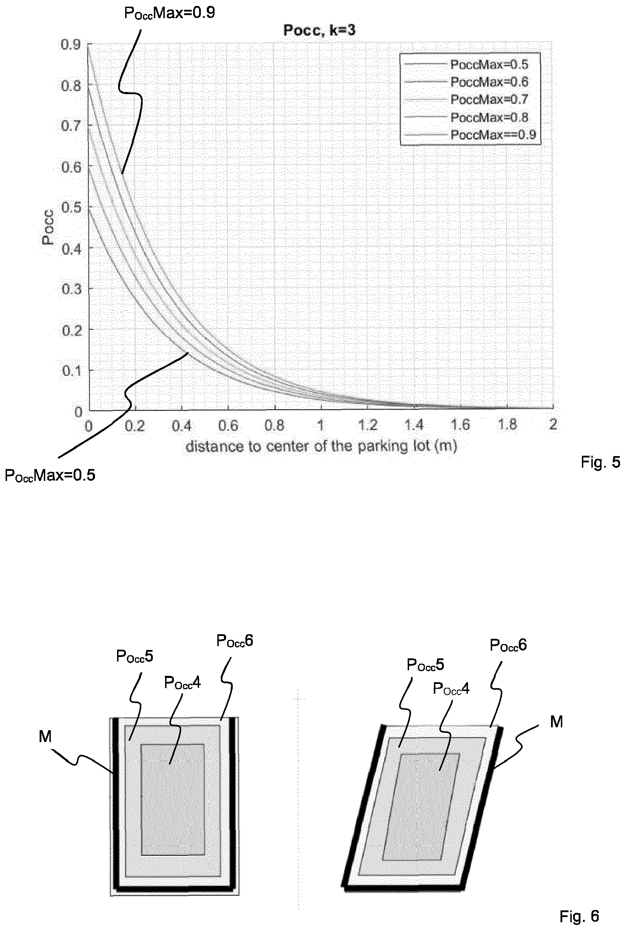

Figure 5 shows a schematic representation of an exponential decay function graph with a fixed decay factor according to an embodiment of the invention. In this representation the decay factor k is set to 3. The different occupancy probability values are in this case in a range of 0.5 to 0.9, which covers the most realistic scenarios if the real state of the parking lot is not known.

Figure 6 shows a schematic representation of an occupancy probability for individual parking spots. In this case, not only the area of the parking lots and their central points are known, but also the specific geometry of the parking markers for each parking spot. The center of the parking spot is more likely to be occupied than the outer area close to the markings M. Therefore, the probability values $P_{occ}4$, $P_{Occ}5$ and $P_{Occ}6$ can be predefined. For parking spots as shown in the left part of figure 6 the area close to the marking M can have an occupancy probability Pocc6 of 0 since usually with such parking spots this area should be free. The center part of the parking spot can have a predefined occupancy probability Pocc4 of 0.5 and is more likely occupied. The area in between could have a predefined probability value $P_{Occ}5$ of 0.3.

For parking spots like shown in the right part of figure 6 the values can be different. Therefore, the probability values can be as follows: Pocc4=0.9, Pocc5=0.7 and $P_{Occ}6=0.2$.

The occupancy probabilities $P_{Occ}1$- $P_{Occ}6$ are only exemplary values. It is understood that there can be more occupancy probabilities and that they are not limited to $P_{Occ}1$ - $P_{Occ}6$ but can be more generally defined as $P_{Occ}1$- $P_{Occ}X$.

**Reference numerals**

| | |
|---|---|
| 1 | system |
| 2 | sensor |
| 3 | evaluation unit |
| 4 | computational unit |
| 5 | database |
| D | data connection |
| d | distance to center of parking lot |
| k | decay factor |
| M | parking spot marking |
| $P_{Occ}1$- $P_{Occ}X$ | occupancy probability values |

**Claims**

1. Method for generating a map in an ego-vehicle for localization of the ego-vehicle comprising the following steps:

   - Acquiring (S1) a map with static objects of an environment of the ego-vehicle;
   - Acquiring (S2) general area information and information on special areas of the ego-vehicle's environment;
   - Acquiring (S3) a predefined occupancy probability ($P_{Occ}1$ - $P_{Occ}X$);
   - Assigning (S4) respective static objects from the map to special areas;
   - Determining (S5) if the static objects are permanent static objects or temporary static objects based on the assignment of the special areas;
   - Updating (S6) the map with the information on temporary and permanent static objects;
   - Capturing (S7) the environment of the ego-vehicle by at least one sensor (2) located in the ego-vehicle;
   - Generating (S8) an environment representation based on the sensor data of the at least one sensor (2);

   - Determining (S9) static and dynamic objects in the environment of the ego-vehicle based on the environment representation;
   - Localizing (S10) the ego-vehicle in the updated map using the sensor data and/or environment representation.

2. Method according to claim 1,
   **characterized in that**,
   the map is acquired by generating the map based on the information from the environment representation or by acquiring a pre created map from an external data source.

3. Method according to claim 1,
   **characterized in that**,
   the area information and the information on special areas is acquired from a database (5), a navigation system, an infrastructure element or by classifying the sensor data.

4. Method according to claim 2,
   **characterized in that**,
   the area information contains information about population density and area type as well as popular times.

5. Method according to claim 1,
   **characterized in that**
   the map is constantly updated to consider the change of special area information and predefined probabilities over time.

6. Method according to claim 1,
   **characterized in that**,
   the special areas are areas that may or not be occupied by temporary static objects.

7. Method according to claim 1,
   **characterized in that**,
   the special areas comprise in particular parking areas.

8. Method according to claim 1,
   **characterized in that**,
   the predefined occupancy probability (Pocc1- PoccX) is acquired from a database (5).

9. Method according to claims 4 and 6,
   **characterized in that**,
   the occupancy probability ($P_{Occ}1$- $P_{Occ}X$) for parking areas is predefined for each individual parking spot.

10. System for generating a map in an ego-vehicle for localization of the ego-vehicle comprising at least one sensor (2) for capturing the environment of the ego-vehicle, an evaluation unit (3) which evaluates sensor data of the at least one sensor (2) and is designed to generate an environment representation and to determine objects and a computational unit (4) that is designed to execute a method according to any of the claims 1 to 7.

S1

S2

S3

S4

S5

S6

S7

S8

S9

S10

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 23 18 4823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GROH BENJAMIN H ET AL: "Advanced real-time indoor parking localization based on semi-static objects", 17TH INTERNATIONAL CONFERENCE ON INFORMATION FUSION (FUSION), INTERNATIONAL SOCIETY OF INFORMATION FUSION, 7 July 2014 (2014-07-07), pages 1-7, XP032654053, [retrieved on 2014-10-03] * Abstract, chapters II.A, II.B, II.C, III.A, III.C, figs. 1, 3-4, 6(a), 6(b) * ----- | 1-10 | INV. G01C21/30 G01C21/00 |
| A | Xiao Chen: "Parking occupancy prediction and pattern analysis", , 1 January 2014 (2014-01-01), pages 1-5, XP055510703, Retrieved from the Internet: URL:http://cs229.stanford.edu/proj2014/Xia o%20Chen,Parking%20Occupancy%20Prediction% 20and%20Pattern%20Analysis.pdf [retrieved on 2018-09-27] * Abstract, chapters I, II.B, VII, figs. 1, 5 * ----- | 4 | |
| A | THOMAS WESTFECHTEL ET AL: "Parking Spot Estimation and Mapping Method for Mobile Robots", IEEE ROBOTICS AND AUTOMATION LETTERS, vol. 3, no. 4, 1 October 2018 (2018-10-01) , pages 3371-3378, XP055746385, DOI: 10.1109/LRA.2018.2849832 * the whole document * ----- | 1-10 | TECHNICAL FIELDS SEARCHED (IPC) G01C |
| A | KR 2021 0085614 A (TIS INC [KR]) 8 July 2021 (2021-07-08) * paragraphs [0001], [0147] - [0156] * ----- | 1-10 | |

The present search report has been drawn up for all claims

| Place of search | Date of completion of the search | Examiner |
|---|---|---|
| The Hague | 15 December 2023 | Eitner, Christian |

EPO FORM 1503 03.82 (P04C01)

## ANNEX TO THE EUROPEAN SEARCH REPORT
## ON EUROPEAN PATENT APPLICATION NO.

EP 23 18 4823

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2023

| Patent document cited in search report | Publication date | Patent family member(s) | Publication date |
|---|---|---|---|
| KR 20210085614 A | 08-07-2021 | NONE | |

EPO FORM P0459